# EUROPEAN PATENT APPLICATION

(11) **EP 2 081 046 A1**
(43) Date of publication of application: **22.07.2009**
(21) Application number: 08150261.9
(22) Date of filing: 15.01.2008
(51) Int. Cl.: G01S 7/38

(54) **An electromagnetic wave interfering obstacle virtually removing system and a method for virtually removing an electromagnetic wave interfering obstacle**

(71) Applicant: Nederlandse Organisatie voor Toegepast- Natuurwetenschappelijk Onderzoek TNO, 2628 VK The Hague (NL)
(72) Inventor: Gerini, Giampiero, 2595 SR Den Haag (NL); Neto, Andrea, 2274 VW Voorburg (NL)
(74) Representative: Hatzmann, Martin

(57) **Abstract**

The invention relates to an electromagnetic wave interfering obstacle virtually removing system. The system comprises a receiving structure positioned at a first side of the electromagnetic wave interfering obstacle facing towards an incoming electromagnetic wave field, the receiving structure being arranged for receiving an electromagnetic signal propagating towards a substantial part of the obstacle's first side. Further, the system comprises a transmitting structure positioned along a substantial part of a second side of the electromagnetic wave interfering obstacle, substantially opposite to the first side, the transmitting structure being arranged for transmitting an electromagnetic signal forwarded to the transmitting structure. The system also comprises an intermediate circuit interconnecting the receiving structure with the transmitting structure for forwarding the received electromagnetic signal to the transmitting structure. The transmitting structure is arranged for transmitting a virtually unhindered propagating wave field.

## Description

The invention relates to an electromagnetic wave interfering obstacle virtually removing system.

Large obstacles, such as wind turbine masts, towers or tall buildings may interfere with electromagnetic waves, such as radar waves, thus degrading the performance of a radar system operating in the vicinity of such an obstacle.

The reduction of radar cross section can be achieved by applying a special coating referred to as electromagnetic wave absorbing material on the mandrel of the obstacle and by careful designing the outside geometry of such an obstacle. By taking the above-mentioned measures a backscattered electromagnetic signal can be reduced. Reducing a shadow effect behind the obstacle is much more difficult to realize, in particular if the size of the obstacle is relatively large in terms of the applied wavelengths.

It is an object of the invention to provide an electromagnetic wave interfering obstacle virtually removing system, wherein the electromagnetic effect of the obstacle is substantially removed from the electromagnetic signals. Thereto, according to the invention, the system comprises a receiving structure positioned at a first side of the electromagnetic wave interfering obstacle facing towards an incoming electromagnetic wave field, the receiving structure being arranged for receiving an electromagnetic signal propagating towards a substantial part of the obstacle's first side. Further, according to the invention, the system comprises a transmitting structure positioned along a substantial part of a second side of the electromagnetic wave interfering obstacle, substantially opposite to the first side, the transmitting structure being arranged for transmitting an electromagnetic signal forwarded to the transmitting structure. According to the invention, the system also comprises an intermediate circuit interconnecting the receiving structure with the transmitting structure for forwarding the received electromagnetic signal to the transmitting structure, wherein the receiving structure, the transmitting structure and the intermediate circuit form a one way obstacle virtually removing system, and wherein the transmitting structure is arranged for transmitting a virtually unhindered propagating wave field.

By applying a one way obstacle virtually removing system, wherein an electromagnetic signal propagating towards a substantial part of an electromagnetic wave interfering obstacle's first side is received, forwarded to a transmitting structure and transmitted by the transmitting structure positioned along a substantial part of a second side of the electromagnetic interfering obstacle, substantially opposite to the first side, and by transmitting a virtually unhindered propagating wave field, the electromagnetic interfering obstacle becomes less visible at the second side, so that a more or less transparent obstacle is simulated. As a consequence, the electromagnetic effect of the obstacle is substantially removed from the transmitted electromagnetic signal.

In this context it is noted that a propagating wave field that is not hindered by the obstacle can be generated by using a transmitting structure that substantially extends along the second, back side of the obstacle, using phase information of the incoming electromagnetic signal at a substantial part of the first, front side of the obstacle. In particular, in order to simulate an unhindered propagating wave field, the transmitted signal can satisfy the condition that its phase is coherent with a wave field propagating from the receiving structure towards the transmitting structure in free space. Preferably, the phase of the transmitted signal and the phase of the wave field propagating from the receiving structure towards the transmitting structure in free space substantially coincide.

The invention also relates to a method for virtually removing an electromagnetic wave interfering obstacle.

Other advantageous embodiments according to the invention are described in the following claims.

By way of example only, embodiments of the present invention will now be described with reference to the accompanying figures in which
Fig. 1 shows a schematic top view of a degraded electromagnetic zone generating obstacle;
Fig. 2 shows a schematic side view of a first embodiment of a system according to the invention;
Fig. 3 shows a schematic top view of a second embodiment of a system according to the invention;
Fig. 4 shows a schematic side view of an obstacle provided with the system of Figure 2;
Fig. 5 shows a schematic side view of the obstacle provided with a third embodiment of a system according to the invention;
Fig. 6a shows a perspective schematic view of an obstacle provided with a fourth embodiment according to the invention;
Fig. 6b shows a perspective schematic view of an obstacle provided with a fifth embodiment according to the invention; and
Fig. 7 shows a perspective schematic view of an obstacle provided with a sixth embodiment according to the invention.

It is noted that the figures shows merely preferred embodiments according to the invention. In the figures, the same reference numbers refer to equal or corresponding parts.

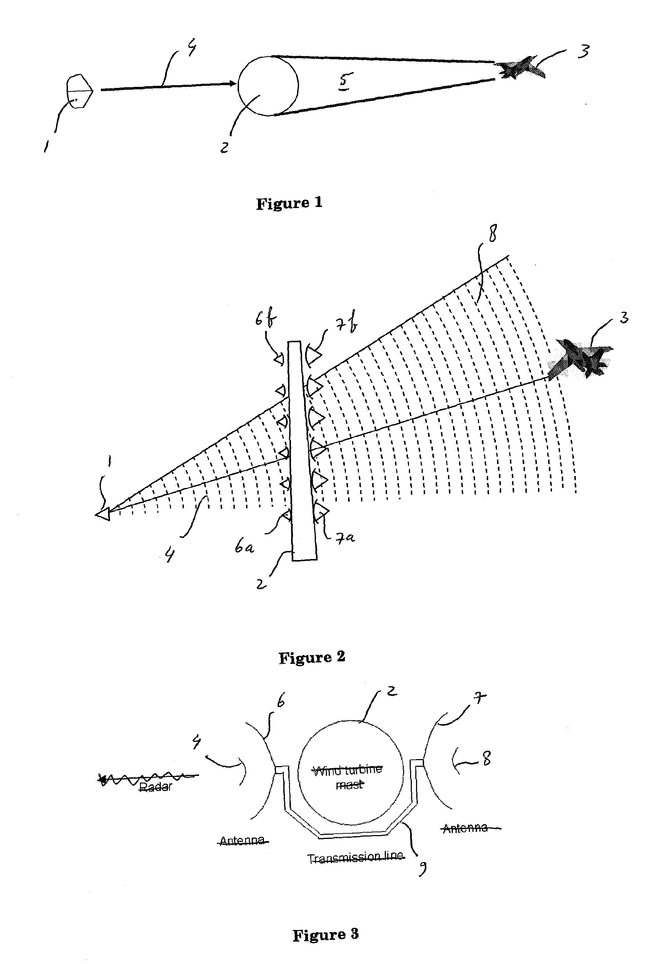

Figure 1 shows a schematic top view of a degraded electromagnetic zone generating obstacle 2. The obstacle is a wind turbine mast that is illuminated by an electromagnetic signal 4 generated by a radar transmission system 1. Behind the wind turbine mast 2, a degraded electromagnetic zone 5 is present wherein the power of the original electromagnetic signal is substantially reduced due to the presence of the reflecting properties of the mast 2. Since the power of the electromagnetic wave in the degraded electromagnetic zone 5 is reduced by the interference character of the obstacle, it might be difficult to detect and/or trace a target 3 present in said degraded electromagnetic zone 5. The radar may e.g. operate in a frequency band ranging from circa 2.7 GHz to 2.9 GHz.

Figure 2 shows a schematic side view of a system according to the invention. The system comprises a receiving structure comprising a series of antenna elements 6a-6f for receiving an electromagnetic signal 4 transmitted by the radar transmission system 1. The receiving antenna elements 6a-6f are positioned at a first side of the mast 2 directed towards the radar transmission system 1, so that the incident wave can be received in an optimal way. By applying a receiving structure positioned along a substantial part of the obstacle's first side the incident electromagnetic wave field impinging the obstacle can be sensed. The system also comprises a transmitting structure comprising a series of antenna elements 7a-7f positioned at a second side of the mast 2, substantially opposite to the first side. The transmitting antenna elements 7a-7f are arranged for transmitting a secondary electromagnetic signal 8 that has been forwarded to the transmitting structure. Further, the system comprises an intermediate circuit (not shown in Figure 2) interconnecting the receiving structure 6 with the transmitting structure 7 for forwarding the received electromagnetic signal to the transmitting antenna elements 7a-7f. The receiving structure 6, the transmitting structure 7 and the intermediate circuit form a one way electromagnetic wave interfering obstacle virtually removing system. To that end, the transmitting structure 7 is arranged for transmitting a virtually unhindered propagating wave field. As such a wave field is generated that would propagate as if no obstacle was present.

According to an aspect of the invention, the intermediate circuit comprises an electronic phase matching element, so that the instant phase of the transmitted wave field can be adjusted to simulate an unhindered propagating wave field. The intermediate circuit may be provided with one or more processors for computing the virtually unhindered propagating wave field.

Fig. 3 shows a schematic top view of a second embodiment of a system according to the invention. In the second embodiment, the intermediate circuit comprises a waveguide structure 9 matching the phase of the wave field 8 transmitted by the transmitting structure. The waveguide structure might e.g. be composed of a dielectric slab wrapped around the mandrel of the wind turbine mast. In this embodiment the receiving structure can be integrated in the waveguide structure by allowing the impinging wave to couple into the structure. Similarly, the wave propagating in the waveguide structure can be induced to leave the waveguide at the back side of the mast 2. However, careful design of the waveguide geometry is needed to facilitate an efficient entrance and exit of the electromagnetic signal. Further, it is desired that the electromagnetic characteristics of the waveguide structure is substantially constant in the applied bandwidth of the electromagnetic signal, so that dispersion is counteracted. In addition, losses must be kept minimal. It is noted, however, that a passive waveguide structure might be advantageous from a reliability point of view.

It is noted that in an advantageous embodiment according to the invention, the intermediate circuit comprises an amplifying element for amplifying the signal to be forwarded to the transmitting structure, thereby at least compensating losses that occur, e.g. in the electromagnetic signal receiving process, the forwarding process and the transmitting process by the transmitting structure, i.e. in the antenna structures and in the intermediate circuit. As a result, an effective radar system can be provided wherein electromagnetically interfering effects of an obstacle are substantially effectively removed. However, the structure can also be provided without an amplifying element, e.g. in providing a one way virtually removing system in order to obtain a configuration wherein an obstacle is substantially transparent in electromagnetic behaviour in one direction.

According to an interesting aspect of the invention, the system further comprises absorbing and/or reflecting material covering further sides of the obstacle to further improve virtual invisible characteristics of the obstacle.

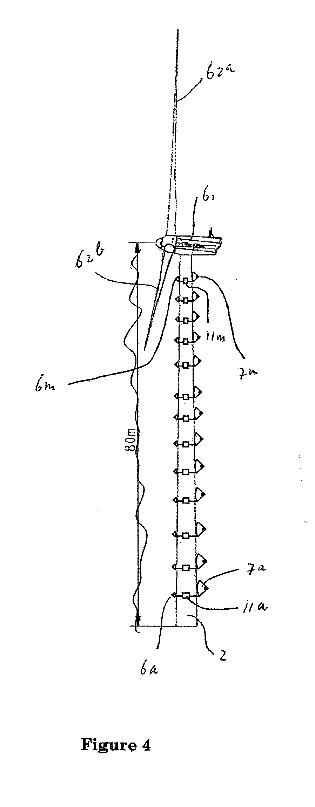

Figure 4 shows a schematic side view of an obstacle, implemented as a wind turbine mast, provided with an electromagnetic wave interfering obstacle virtually removing system according to the first embodiment of the invention, as schematically shown in Figure 2. In particular, the receiving structure comprises fifteen discrete receiving antennas 6a-6m and the transmitting structure comprises fifteen discrete transmitting antennas 7a-7m. The wind turbine 2 is provided with a nacelle 61 carrying three turbine blades 62a-c. It is obvious, that the receiving structure and/or transmitting structure may also comprise a different number of receiving antennas and/or transmitting antennas, respectively, viz. more than fifteen antennas, e.g. twenty antennas, or less than fifteen antennas, e.g. ten antennas.

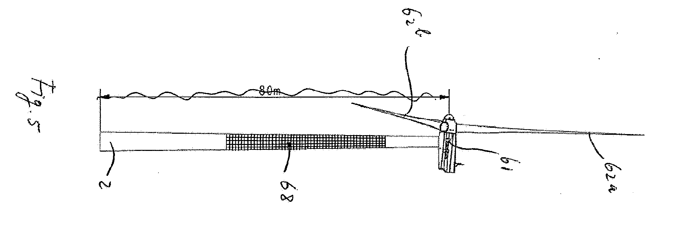

Figure 5 shows a schematic side view of a wind turbine mast that is provided with an electromagnetic wave interfering obstacle virtually removing system according to a third embodiment of the invention. Instead of parabolic antennas, the system comprises a phased array antenna 68 for receiving and transmitting electromagnetic waves, hereby providing a compact, optionally thin antenna structure. As a consequence, the receiving and/or transmitting structure is less visible, especially if such a structure is integrated with a plane or curved mandrel of the mast. The system may also comprise a multiple number of phased array antennas. Further, other antenna types are applicable, such as one or more sparse array antennas.

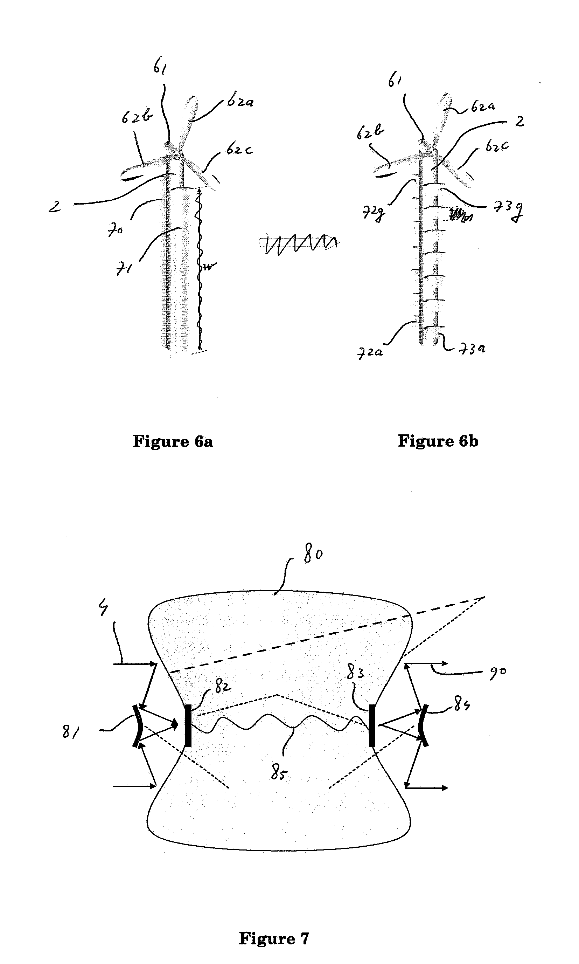

Figures 6a and 6b show perspective schematic views of an obstacle provided with further embodiments according to the invention. In Figure 6a, the receiving structure and the transmitting structure each comprise a single cylindrical parabolic reflector 70, 71 that can e.g. be implemented using a metal mesh pattern that is relatively robust with respect to weather influences. Further, in Figure 6b, the cylindrical parabolic reflector is divided in discrete, separate receiving structure segments 72a-g and discrete, separate transmitting structure segments, 73a-g.

Advantageously, the system may further comprise an additional one way obstacle virtually removing system for transmitting, from the first side of the obstacle, a virtually unhindered propagating wave field in a direction opposite to the original incoming wave field that is received by the receiving structure of the original one way obstacle virtually removing system, so that not merely forward electromagnetic signals can virtually be transmitted through the obstacle, but also electromagnetic signals propagating backwards, e.g. after reflection against a target. Similar to the original one way obstacle virtually removing system, the additional one way obstacle virtually removing system comprises an additional receiving structure, an additional intermediate circuit and an additional transmitting structure. By applying the additional one way obstacle virtually removing system, a two way obstacle virtually removing system is obtained. The virtually removing actions thus apply in two directions, viz. in a direction from a radar system towards the target and vice versa, from the target towards the radar system. As a result, the electromagnetically interfering obstacle is rendered electromagnetically virtually transparent, thereby increasing a sensitivity of the radar system with respect to the region behind the obstacle as a forward travelling signal as well as a back travelling signal is received, forwarded and retransmitted. However, in principle, the system can also be provided with a single obstacle virtually removing system acting merely in a single direction, e.g. to provide an electromagnetically transparent system in one direction.

In a preferred embodiment according to the invention, the receiving antenna of the electromagnetic repeater module is integrated with the transmitting antenna of the additional electromagnetic repeater module. Similarly, the transmitting antenna of the electromagnetic repeater module can be integrated with the receiving antenna of the additional electromagnetic repeater module, thereby saving components. By using dedicated electronic circuit components, suitable signal paths can be provided so that a single antenna can be used both for receiving an electromagnetic signal and for transmitting an electromagnetic signal.

In the systems shown in Figures 6a and 6b, the antenna structures can be used for performing the tasks of both the electromagnetic repeater module and the additional electromagnetic repeater module.

In order to obtain a desired radiation characteristic of the overall transmitting antenna system, it is preferred that positions of individual antenna elements are optimized accordingly.

Figure 7 shows a schematic view of a further embodiment of a system according to the invention. Here, the entire shape of the mast 80 is designed to form a reflector structure, thereby making large discrete reflecting elements superfluous. Incoming electromagnetic signals 4 are reflected to a small receiving reflector 81 directing the signals to a receiving antenna 82. The receiving antenna 82 is interconnected to a transmitting antenna 83 via an intermediate circuit 85 described above. Similarly, the transmitted signal is reflected to a relatively small reflecting element 84, further reflected by the outer surface of the mast and propagating away 90 from the wind turbine mast 80.

It is noted that the size and aperture of the receiving and transmitting antenna elements is preferably similar, thereby enabling a proper simulated wave field and enabling a similar quality of a transmitting path and receiving path. Further, the receiving and transmitting antenna elements can then advantageously be used as part of both the one way obstacle virtually removing system and the additional one way obstacle virtually removing system. As such, the embodiments shown in Figures 3, 5, 6a, 6b and 7 comprise antenna elements that can be used for both obstacle virtually removing systems.

The invention is not restricted to the embodiments described herein. It will be understood that many variants are possible.

Instead of using the system according to the invention for virtually removing a wind turbine mast, the system according to the invention can also be applied to virtually remove other electromagnetic wave interfering obstacles, such as high buildings, towers, radio masts, etc.

It is noted that the incident waves can be generated by a radar transmission system. However, the incident waves can also be generated otherwise, e.g. after transmission of an electromagnetic repeater system.

Other such variants will be obvious for the person skilled in the art and are considered to lie within the scope of the invention as formulated in the following claims.

## Claims

1. An electromagnetic wave interfering obstacle virtually removing system, comprising a receiving structure positioned at a first side of the electromagnetic wave interfering obstacle facing towards an incoming electromagnetic wave field, the receiving structure being arranged for receiving an electromagnetic signal propagating towards a substantial part of the obstacle's first side, further comprising a transmitting structure positioned along a substantial part of a second side of the electromagnetic wave interfering obstacle, substantially opposite to the first side, the transmitting structure being arranged for transmitting an electromagnetic signal forwarded to the transmitting structure, and an intermediate circuit interconnecting the receiving structure with the transmitting structure for forwarding the received electromagnetic signal to the transmitting structure, wherein the receiving structure, the transmitting structure and the intermediate circuit form a one way obstacle virtually removing system, and wherein the transmitting structure is arranged for transmitting a virtually unhindered propagating wave field.

2. A system according to claim 1, wherein the receiving structure and/or the transmitting structure comprises one or a multiple number of parabolic antennas.

3. A system according to claim 1 or 2, wherein the receiving structure and/or the transmitting structure comprises a phased array antenna and/or a sparse array antenna.

4. A system according to claim 3, wherein the phased array antenna and/or the sparse array antenna is integrated with a mandrel of the electromagnetic wave interfering obstacle.

5. A system according to any previous claim, wherein the intermediate circuit comprises an electronic phase matching element.

6. A system according to any previous claim, wherein the intermediate circuit comprises a waveguide structure matching the phase of the wave field transmitted by the transmitting structure.

7. A system according to any previous claim, wherein the intermediate circuit comprises an amplifier.

8. A system according to any previous claim, further comprising an additional one way obstacle virtually removing system for transmitting, from the first side of the obstacle, a virtually unhindered propagating wave field in a direction opposite to the original incoming wave field.

9. A system according to any previous claim, further comprising absorbing and/or reflecting material covering further sides of the obstacle.

10. A method for virtually removing an electromagnetic wave interfering obstacle, comprising the steps of:
- receiving an electromagnetic signal propagating towards a substantial part of an electromagnetic wave interfering obstacle's first side;
- forwarding the received electromagnetic signal to a transmitting structure via an intermediate circuit;
- transmitting the forwarded signal by the transmitting structure positioned along a substantial part of a second side of the electromagnetic interfering obstacle, substantially opposite to the first side,
wherein the transmitting step comprises transmitting a virtually unhindered propagating wave field.

11. A method according to claim 10, comprising the steps of:
- receiving an electromagnetic signal propagating towards a substantial part of the electromagnetic wave interfering obstacle's second side;
- forwarding the received electromagnetic signal to an additional transmitting structure via an additional intermediate circuit;
- transmitting the forwarded signal by the additional transmitting structure positioned along a substantial part of the first side of the electromagnetic interfering obstacle,
wherein the transmitting step comprises transmitting a virtually unhindered propagating wave field in a direction opposite to the original incoming wave field.
